# FASCICULE DE BREVET EUROPEEN

(11) **EP 0 959 334 B1**
(45) Date de publication et mention de la délivrance du brevet: **18.07.2007**
(21) Numéro de dépôt: 99440115.6
(22) Date de dépôt: 18.05.1999
(51) Int. Cl.: G01K 1/08, G01K 13/00

(54) **Procédé de fabrication d'un appareil ou d'un instrument par surmoulage et appareil ou instrument ainsi obtenu**
Verfahren zur Herstellung eines Gerätes oder eines Instruments durch Umspritzung und so erhaltenes Gerät oder Instrument
Manufacturing process of an apparatus or instrument by overmoulding and apparatus or instrument obtained by such process

(30) Priorité: 18.05.1998 FR 9806435
(43) Date de publication de la demande: 24.11.1999
(73) Titulaire: Kirchdoerffer, Rémy, 67110 Reichshoffen (FR); Elefteriou, Pierre, 67350 Pfaffenhoffen (FR)
(72) Inventeur: Kirchdoerffer, Rémy, 67110 Reichshoffen (FR); Elefteriou, Pierre, 67350 Pfaffenhoffen (FR)
(74) Mandataire: Nuss, Pierre

(56) Documents cités:
- EP-A- 0 171 769
- US-A- 4 766 095
- PATENT ABSTRACTS OF JAPAN vol. 013, no. 018 (E-704), 17 janvier 1989 (1989-01-17) -& JP 63 226033 A (MITSUBISHI ELECTRIC CORP), 20 septembre 1988 (1988-09-20)
- PATENT ABSTRACTS OF JAPAN vol. 097, no. 005, 30 mai 1997 (1997-05-30) -& JP 09 015060 A (SHICHIZUN DENSHI:KK), 17 janvier 1997 (1997-01-17)
- PATENT ABSTRACTS OF JAPAN vol. 009, no. 006 (P-326), 11 janvier 1985 (1985-01-11) -& JP 59 155732 A (KIYUUSHIYUU HITACHI MAKUSERU KK), 4 septembre 1984 (1984-09-04)

## Description

La présente invention concerne le domaine de la production d'appareils et d'instruments, plus particulièrement ceux soumis à des conditions d'utilisation et/ou de nettoyage extrêmes, et a pour objet un procédé de fabrication d'un appareil ou instrument, ainsi qu'un appareil ou instrument, notamment du type thermomètre électronique, obtenu par ce procédé.

Plus particulièrement, la présente invention concerne un procédé de fabrication d'un thermomètre électronique selon le préambule de la revendication 1.

Certains appareils ou instruments renfermant des composants électriques et/ou électroniques peuvent être mis en oeuvre dans des conditions de chocs, d'exposition à des liquides, de désinfection et d'agressions chimiques et physiques poussées.

Tel est notamment le cas des thermomètres électroniques, notamment ceux utilisés en milieu hospitalier.

Or, ces instruments sont actuellement fabriqués par assemblage, par exemple par vissage, soudage ou encliquetage, de deux demi-coques ou par assemblage d'un corps monocoque avec un capuchon, la carte ou le circuit imprimé supportant les éléments fonctionnels étant introduit(e) préalablement dans les corps de ces instruments (voir par exemple EP-A-0 171 769).

Il en résulte des lignes de joint et des discontinuités de surface qui constituent des zones de faiblesse en termes d'étanchéité, pouvant entraîner un endommagement de l'instrument, notamment lorsqu'il est plongé pendant une durée prolongée dans un liquide, par exemple désinfectant, et nécessitent un temps de nettoyage et de désinfection important, pénalisant pour le personnel en charge de cette opération et de ce fait souvent tronqué.

On connaît, par ailleurs, des techniques de fabrication de pièces ou d'éléments par surmoulage par injection de matière thermoplastique, permettant de réaliser des pièces et des éléments résistants aux chocs, compacts et relativement étanches, sans nécessiter le recours à des procédés d'assemblage fastidieux et pénalisants économiquement.

Toutefois, les techniques de surmoulage actuelles font appel à des éléments de calage débouchant sur la face externe de la pièce surmoulée et constituant des discontinuités à ce niveau, n'autorisent pas le surmoulage des pièces sensibles à la chaleur, ou à la pression, ne permettent pas de ménager de passage s'étendant de l'élément à surmouler jusqu'à la surface extérieure du produit surmoulé et entraînent une consommation importante de matériau thermoplastique, pénalisante pour le coût de revient et le poids du produit fini.

Par le document US-A-4 766 095, on connaît un procédé de fabrication d'un circuit intégré, en particulier d'une mémoire EPROM. Dans ce procédé, le composant fonctionnel semi-conducteur est monté dans une coque ouverte et est enrobé de résine avant d'être surmoulé.

La présente invention a notamment pour but de pallier au moins certains des inconvénients spécifiques en liaison avec la fabrication d'un thermomètre électronique.

A cet effet, l'invention propose la mise en oeuvre des caractéristiques opératoires exposées dans la partie caractérisante de la revendication 1.

L'invention a également pour objet un thermomètre électronique tel que ressortant de la revendication 9.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et en coupe d'une structure support d'éléments fonctionnels disposé dans un moule à injection, avant surmoulage ;
la figure 2 est vue en élévation latérale et en coupe d'un ensemble module capteur de température/circuit imprimé d'un thermomètre électronique disposé dans un moule à injection, avant surmoulage ;
la figure 3 est une vue en élévation latérale et en coupe d'un thermomètre électronique selon un premier mode de réalisation de l'invention ;
la figure 4 est une vue analogue à celle de la figure 2 selon une variante de réalisation ne faisant pas partie de l'invention, et,
la figure 5 est une vue en coupe transversale d'un thermomètre électronique selon une variante de réalisation ne faisant pas partie de l'invention.

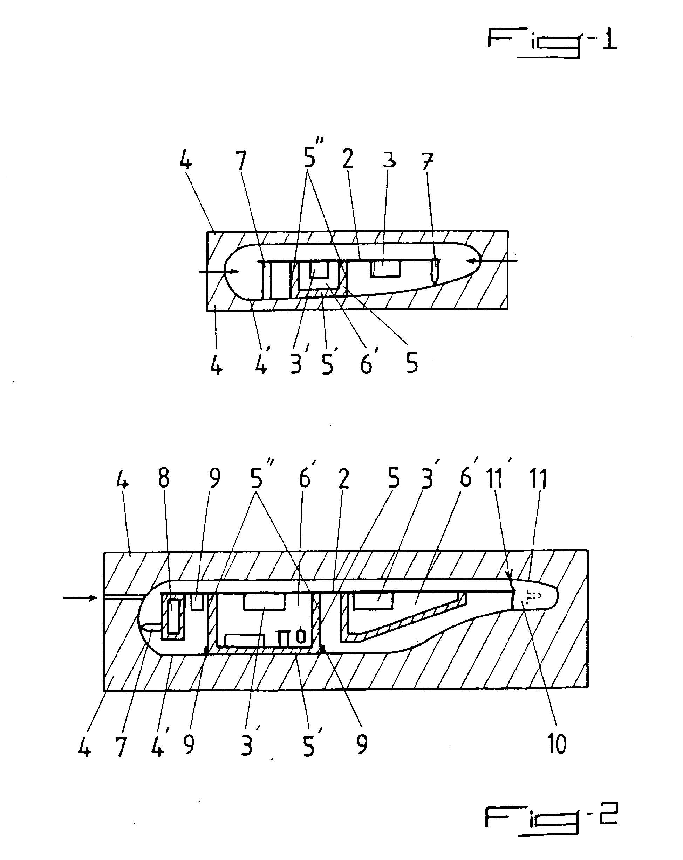

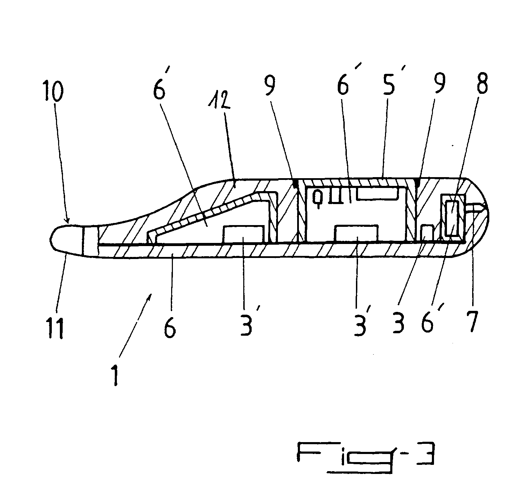

Comme le montrent les figures 1, 2 et 4 des dessins annexés, le procédé de fabrication selon l'invention consiste essentiellement à disposer la structure support 2 portant lesdits éléments fonctionnels 3, 3' et pouvant se présenter notamment sous la forme d'une ou de plusieurs carte(s) ou plaque(s), dans un moule à injection 4, ladite structure support 2 étant positionnée dans le moule 4 notamment par l'intermédiaire d'au moins un élément 5 en forme de capot ou de coque rapporté sur ladite structure support 2 et dont une portion de paroi 5' au moins repose directement contre la face interne 4' dudit moule 4, puis à injecter, après fermeture du moule 4, le matériau thermoplastique destiné à former le corps 6 ou une partie au moins du corps 6 de l'appareil ou de l'instrument 1 concerné et recouvrant entièrement ou partiellement le ou les élément(s) 5 en forme de capot ou de coque, à l'exception de la ou des paroi(s) ou portion(s) de paroi(s) 5' en contact avec la face interne 4' du moule 4 de ce(s) dernier(s) et, enfin, après solidification du matériau thermoplastique, à extraire ledit appareil ou instrument 1 dudit moule 4.

L'élément 5 peut, par conséquent, dans certains cas, assurer à lui seul le maintien de la structure support 2 dans le moule 4 et formera ainsi le seul élément surmoulé débouchant sur la face extérieure de l'appareil ou de l'instrument 1.

La paroi ou portion de paroi 5' pourra réaliser plusieurs fonctions, éventuellement cumulables, à la fois technique et esthétique.

Ainsi, la paroi ou portion de paroi 5' du capot ou de la coque 5 en contact avec la face interne 4' du moule 4 peut être transparente sur au moins une partie de sa surface et/ou présenter une texture souple et flexible sur au moins une partie de sa surface.

Les dispositions précitées permettront de disposer sous ladite paroi ou portion de paroi 5' des voyants de signalisation ou des moyens d'affichage, par exemple du type DEL ou LCD, ainsi que des moyens de commande du type boutons ou analogue, permettant de réaliser une liaison interactive entre l'utilisateur et l'instrument ou l'appareil 1, sans compromettre l'étanchéité de ce dernier.

En outre, en formant des cavités creuses, ledit au moins un élément 5 en forme de capot ou de coque permet de réduire la quantité de matière thermoplastique nécessaire au surmoulage.

De plus, en vue d'éviter tout endommagement des éléments fonctionnels 3, 3' au cours du surmoulage, compte tenu des conditions de température, de pression et de vitesse d'injection liées à cette opération, ledit au moins un élément 5 rapporté en forme de capot ou de coque constitue avec la carte ou plaque 2 correspondante une structure sensiblement fermée, isolant le ou les circuits ou composants sensibles 3', notamment celui ou ceux sensible(s) à la chaleur, du matériau thermoplastique chaud injecté.

Lorsqu'un maintien supplémentaire de la carte ou plaque 2 dans le moule 4 est nécessaire, il peut être prévu que cette dernière comporte également au moins une pièce de calage 7 rapportée reposant contre la face interne 4' du moule 4 fermé par l'intermédiaire d'un contact ponctuel ou quasi-ponctuel, ou non, suivant qu'il est prévu que l'extrémité de ladite pièce de calage 7 soit visible ou non (voir notamment figure 1 des dessins annexés).

Conformément à une première variante de réalisation de l'invention, représentée aux figures 1 à 3 des dessins annexés, la matériau thermoplastique 12 injecté forme sensiblement la totalité du corps 6 d'un seul tenant de l'appareil ou de l'instrument 1 et recouvre entièrement la structure support 2, les éléments fonctionnels 3 et le ou les élément(s) 5 en forme de capot ou de coque, à l'exception de la ou des paroi(s) ou portion(s) de paroi(s) 5' en contact avec la face interne 4' du moule 4 de ce(s) dernier(s)

Afin d'alléger l'instrument ou l'appareil 1 concerné, de pouvoir définir une couche d'enrobage ou de surmoulage sensiblement constante, même en cas de forme extérieure à section fortement variable, et de pouvoir équilibrer la répartition de la masse dudit appareil ou instrument 1, le procédé peut consister à rapporter sur la ou les carte(s) 2 plusieurs éléments 5, 8 constituant des structures creuses fermées ou formant avec la carte 2 des structures creuses fermées, dont au moins une est en contact avec la face interne 4' du moule 4 et/ou dont au moins une recouvre au moins un circuit ou composant sensible 3' en l'isolant de tout contact avec le matériau thermoplastique injecté, destiné à former le corps 6.

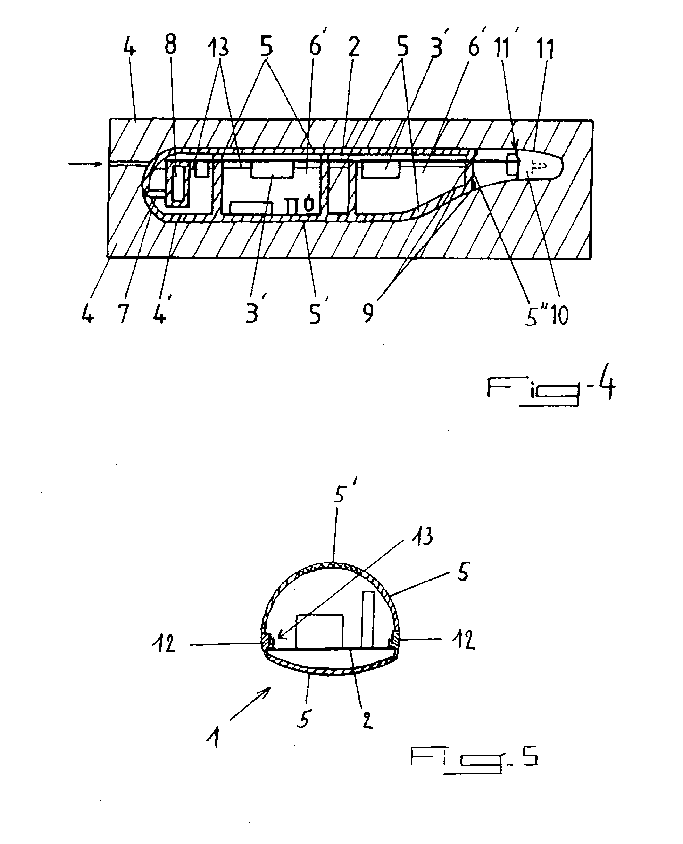

Selon une variante de réalisation ne faisant pas partie de l'invention, représentée aux figures 4 et 5 des dessins annexés, l'élément 5 en forme de coque creuse peut renfermer sensiblement la totalité de la structure support 2 et délimiter sensiblement le volume et la forme extérieure du corps 6, le matériau thermoplastique 12 surmoulé couvrant uniquement les zones de jointoiement et d'assemblage de ladite coque.

Cette dernière pourra, comme le montre la figure 5 des dessins annexés, être formée de deux demi-coquilles (parties supérieure et inférieure) assemblées entre-elles au niveau d'une ligne d'assemblage circonférentielle 13 par l'intermédiaire d'une liaison par encliquetage ou à chicane.

De manière avantageuse, l'élément 5 en forme de coque présente, au niveau de ses zones de jointoiement et d'assemblage, notamment au niveau des lignes d'assemblage 13 de ses différentes parties constitutives, une configuration renfoncée ou en dépression par rapport à la forme extérieure du corps 6 telle que définie par le moule 4, permettant d'obtenir une étanchéité parfaite et une tenue mécanique du fait de l'épaisseur de matière surmoulée résultante.

En vue d'assurer une étanchéité totale entre l'élément 5 ou les éléments 5 et le matériau thermoplastique formant le corps 6 au plus près de la surface externe 6' de l'appareil ou de l'instrument 1, chaque élément 5 en forme de capot ou de coque peut présenter au niveau de ses parois latérales 5", par exemple, dans la première variante, à proximité de sa paroi ou de sa portion de paroi 5' en contact avec la face interne 4' du moule 4, au moins une bande 9 de surface périphérique non plane, comportant par exemple des conformations en forme de nervure(s) et de rainure(s), formant des chicanes d'étanchéité.

Bien que le procédé de fabrication puisse être mis en oeuvre pour la réalisation de divers appareils ou instruments 1, il est particulièrement bien adapté pour la réalisation d'instruments ou d'appareils de mesure, notamment de thermomètres électroniques ou de dispositifs de mesure analogues.

Un tel thermomètre électronique comprendra une carte 2 supportant les composants électriques et électroniques 3, 3' et un module 10 capteur de température, relié à ladite carte 2 et intégrant une sonde correspondante. Ce module 10 est encapsulé, préalablement au surmoulage du corps 6 du thermomètre 1, dans une coque 11 en un matériau adapté, seule une portion arrière 11' de ladite coque 11, dirigée vers la carte 2, étant surmoulée par le matériau thermoplastique formant le corps 6.

Le module 10 capteur de température pourra préférentiellement être monté sur ou relié à la carte ou plaque 2 par une liaison rigide et servir ainsi de pièce de maintien et de calage de ladite carte ou plaque 2 dans le moule 4, sa partie non recouverte par le matériau thermoplastique pouvant reposer directement contre la face interne dudit moule 4 et être éventuellement pincé entre les parties constitutives de ce dernier ou reposer sur la partie inférieure de l'élément 5 en forme de coque.

La présente invention a également pour objet un thermomètre électronique présentant un corps résultant d'un surmoulage partiel ou total de ses éléments fonctionnels et obtenu par l'intermédiaire du procédé de fabrication décrit précédemment.

L'invention concerne, en outre, comme le montre la figure 3 des dessins annexés, un thermomètre électronique 1 comprenant une carte ou un circuit imprimé 2 supportant ses éléments fonctionnels 3, 3' et relié à un module 10 capteur de température intégrant au moins une sonde. Le corps 6 de ce thermomètre 1 est réalisé par surmoulage d'un matériau thermoplastique de nature bio-compatible et ledit corps 6 comporte au moins une cavité creuse 6' délimitée, chacune, d'une part, par la carte ou le circuit imprimé 2 et, d'autre part, par un élément 5 en forme de capot ou de coque rapporté sur ladite carte ou ledit circuit imprimé 2 et dont une portion de paroi 5' au moins n'est pas recouverte par le matériau thermoplastique et est affleurante avec la surface extérieure 6" dudit corps 6.

La paroi ou portion de paroi ou portion de paroi 5' affleurante et non recouverte par le matériau thermoplastique formant le corps 6 est au moins partiellement souple et/ou au moins partiellement transparente, ledit élément 5 en forme de capot ou de coque s'étendant par dessus au moins un composant ou circuit 3' sensible, notamment à la chaleur, et/ou au moins un composant ou circuit de signalisation lumineuse ou sonore, tels que des voyants, un écran d'affichage, un vibreur, un bip ou analogue.

Selon une variante ne faisant pas partie de la présente invention, et comme le montre la figure 5 des dessins annexés, le corps 6 dudit thermomètre 1 est essentiellement constitué par un élément 5 en forme de coque creuse, surmoulé, au niveau des lignes d'assemblage de ses parties constitutives et de ses zones de jointoiement avec le module capteur 10 d'un matériau thermoplastique 12, ces zones ou lignes étant, le cas échéant, situées en retrait par rapport à la surface externe du corps 6 ou au fond d'une rainure, le matériau thermoplastique 12 recouvrant ces zones ou lignes de manière à constituer une surface externe contiguë avec la surface externe des portions adjacentes de l'élément 5 en forme de coque.

Selon une caractéristique de l'invention, représentée à la figure 3 des dessins annexés, le module 10 capteur de température est encapsulé dans une coque 11 en un matériau adapté dont seule une portion d'extrémité arrière 11' est recouverte par le matériau thermoplastique de surmoulage.

Ladite portion d'extrémité arrière 11' pourra également comporter des conformations en rainures et nervures, destinées à permettre un liaisonnement solide et étanche par imbrication entre le corps 6 surmonté et la coque 11 recouvrant et renfermant le module 10, le matériau thermoplastique pouvant avantageusement former un joint à lèvre extérieur.

Cette coque 11 pourra elle-même être du type surmoulé et réalisée en un matériau bon conducteur de chaleur.

Comme déjà indiqué précédemment, le corps 6 surmoulé pourra avantageusement comporter plusieurs cavités creuses 6' délimitées par des éléments creux fermés 8 et/ou en forme de capot ou de coque 5 rapportés sur ladite carte ou ledit circuit imprimé 2, dont au moins un est affleurant au niveau de la surface externe 6" du corps 6 et/ou encapsule au moins un composant sensible 3'.

De manière préférentielle, le thermomètre électronique 1 précité est obtenu au moyen du procédé de fabrication décrit, ci-dessus, en tant que produit fini venu de moulage et présente une forme extérieure galbée, sensiblement dépourvue de renfoncement et d'interstice.

Bien entendu, l'invention n'est pas limitée au mode de réalisation décrit et représenté aux figures 1 à 3 des dessins annexés. Des modifications restent possibles, notamment du point de vue de la constitution des divers éléments ou par substitution d'équivalents techniques, sans sortir pour autant du domaine de protection de l'invention.

## Revendications

1. Procédé de fabrication d'un thermomètre électronique par surmoulage partiel de ses éléments fonctionnels et/ou constitutifs, notamment de ses composants et circuits électriques et/ou électroniques, ledit thermomètre comprenant au moins une carte supportant les composants électriques et électroniques et un module capteur de température intégrant une sonde correspondante, procédé **caractérisé en ce qu'**il consiste :
- à enfermer la carte (2) et les circuits (3, 3') dans un élément (5) en forme de coque creuse ou à rapporter sur la carte (2) au moins un élément (5) en forme de capot ou de coque formant avec ladite carte (2) une structure creuse sensiblement fermée, isolant le ou les circuit(s) sensible(s) (3'),
- à encapsuler le module (10) capteur de température dans une coque (11) en un matériau adapté, et à le relier à la carte (2),
- à disposer la carte (2) avec les circuits (3, 3'), ledit ou lesdits élément(s) (5) en forme de capot ou de coque et le module (10) dans un moule à injection (4), ladite carte (2) étant positionnée dans le moule (4) notamment par l'intermédiaire dudit au moins un élément (5) en forme de capot ou de coque dont une portion de paroi (5') au moins repose directement contre la face interne (4') dudit moule (4),
- puis à injecter, après fermeture du moule (4), le matériau thermoplastique (12) destiné à former une partie au moins du corps (6) du thermomètre (1) concerné et recouvrant partiellement le ou les élément(s) (5) en forme de capot ou de coque, à l'exception de la ou des paroi(s) ou portion(s) de paroi(s) (5') en contact avec la face interne (4') du moule (4) de ce(s) dernier(s)
- et, enfin, après solidification du matériau thermoplastique injecté, à extraire ledit thermomètre (1) dudit moule (4).

2. Procédé selon la revendication 1, **caractérisé en ce que** la carte (2) comporte également au moins une pièce de calage (7) rapportée, reposant contre la face interne (4') du moule (4) fermé par l'intermédiaire d'un contact ponctuel ou quasi-ponctuel.

3. Procédé selon l'une quelconque des revendications 1 et 2, **caractérisé en ce que** la paroi ou portion de paroi (5') du capot ou de la coque (5) en contact avec la face interne (4') du moule (4) est transparente sur au moins une partie de sa surface.

4. Procédé selon l'une quelconque des revendications 1 à 3, **caractérisé en ce que** la paroi ou portion de paroi (5') du capot ou de la coque (5) en contact avec la face interne (4') présente une texture souple et flexible sur au moins une partie de sa surface.

5. Procédé selon l'une quelconque des revendications 1 à 4, **caractérisé en ce que** le matériau thermoplastique (12) injecté forme sensiblement la totalité du corps (6) d'un seul tenant de l'appareil ou de l'instrument (1) et recouvre entièrement la structure support (2), les éléments fonctionnels (3) et le ou les élément(s) (5) en forme de capot ou de coque, à l'exception de la ou des paroi(s) ou portion(s) de paroi(s) (5') en contact avec la face interne (4') du moule (4) de ce(s) dernier(s)

6. Procédé selon l'une quelconque des revendications 1 à 5, **caractérisé en ce qu'**il consiste à rapporter sur la ou les carte(s) (2) plusieurs éléments (5, 8) constituant des structures creuses fermées ou formant avec la carte (2) des structures creuses fermées, dont au moins une est en contact avec la face interne (4') du moule (4) et/ou dont au moins une recouvre au moins un circuit ou composant sensible (3') en l'isolant de tout contact avec le matériau thermoplastique injecté, destiné à former le corps (6).

7. Procédé selon l'une quelconque des revendications 1 à 6, **caractérisé en ce que** l'élément ou chaque élément (5) en forme de capot ou de coque présente au niveau de ses parois latérales (5") au moins une bande (9) de surface périphérique non plane, comportant par exemple des conformations en forme de nervure(s) et de rainure(s).

8. Procédé selon l'une quelconque des revendications 1 à 7, **caractérisé en ce que** seule une portion arrière (11') de ladite coque (11) dirigée vers la carte (2), est surmoulée par le matériau thermoplastique (12) formant une partie du corps (6).

9. Thermomètre électronique comprenant une carte ou un circuit imprimé supportant ses éléments fonctionnels, en particulier ses composants et circuits électriques et/ou électroniques, et relié à un module capteur de température se terminant par une sonde, **caractérisé en ce que** le corps (6) dudit thermomètre (1) est réalisé par surmoulage d'un matériau thermoplastique et **en ce que** ledit corps (6) comporte au moins une cavité creuse (6') délimitée, chacune, d'une part, par la carte ou le circuit imprimé (2) et, d'autre part, par un élément (5) en forme de capot ou de coque rapporté sur ladite carte ou ledit circuit imprimé (2) et dont une portion de paroi (5') au moins n'est pas recouverte par le matériau thermoplastique et est affleurante avec la surface extérieure (6") dudit corps (6), ledit au moins un élément (5) renfermant la carte (2) et les circuits ou composants (3, 3') ou formant avec ladite carte (2) une structure creuse fermée isolant le ou les circuit(s) sensible(s) (3') et le module (10) capteur de température étant encapsulé dans une coque (11).

10. Thermomètre électronique selon la revendication 9, **caractérisé en ce qu'**il est obtenu au moyen du procédé de fabrication selon l'une quelconque des revendications 1 à 8, en tant que produit fini venu de moulage et présente une forme extérieure galbée, sensiblement dépourvue de renfoncement et d'interstice.

## Claims

1. A process for the production of an electronic thermometer by partial overmoulding of its constituent and/or functional elements, particularly of its electrical and/or electronic circuits and components, the said thermometer comprising at least one card for supporting the electrical and electronic components and a temperature sensor unit integral with a corresponding probe, the process **characterised in that** it consists of :
- enclosing the card (2) and the circuits (3,3') in an element (5) in the form of a hollow shell included with the card (2), or at least an element (5) in the form of a bonnet or a shell forming with the said card (2) a substantially hollow closed structure, substantially isolating the circuit or the circuits (3'),
- encapsulating the temperature sensor unit (10), connected to the card (2), in a shell (11) of an adapted material and,
- placing the card (2) with the circuits (3,3'), the said element(s) (5) in the form of a bonnet or shell, and the unit (1) in an injection mould (4) particularly by the intermediary of said at least one element (5) in the form of a bonnet or shell of which at least a portion of the wall (5') rests directly against the internal face (4') of said mould (4),
- then injecting, after closing of the mould (4), the thermoplastic material (12) for forming at least a part of the body (6) of the thermometer (1) concerned, and partially covering the element(s) (5), in the form of a bonnet or shell, excluding the wall(s) or portion(s) of the wall(s) (5') in contact with the internal surface (4') of the mould (4),
- and, finally, after solidification of the injected thermoplastic material, removing the said thermometer (1) from the said mould (4).

2. The process according to claim 1, **characterised in that** the card (2) also comprises at least one chock (7), resting against the internal surface (4') of the mould (4) closed by the intermediary of a limited or quasi-limited contact point.

3. The process according to any of Claims 1 and 2, **characterised in that** the wall or portion of wall (5') of the bonnet or shell (5) in contact with the internal surface (4') of the mould (4) is transparent over at least a part of the surface.

4. The process according to any of Claims 1 to 3, **characterised in that** the wall or portion of wall (5') of the bonnet or shell (5) in contact with the internal surface (4') is flexible over at least a part of its surface.

5. The process according to any of Claims 1 to 4, **characterised in that** the injected thermoplastic material (12) forms substantially all of the body (6) of the device or the instrument (1) in one piece and entirely covers the support structure (2), the functional elements (3), and the element(s) (5) in the form of a bonnet or shell, excluding the wall(s) or portion(s) of wall(s) (5') in contact with the internal surface (4') of the mould (4).

6. The process according to any of Claims 1 to 5, **characterised in that** included on the card(s) (2) are several elements (5,8) comprising closed hollow structures, or forming with the card (2) closed hollow structures, of which at least one is in contact with the internal surface (4') of the mould (4) and/or of which at least one covers at least a circuit or component (3') substantially isolating its contact with the injected thermoplastic material, for forming the body (6).

7. The process according to any of Claims 1 to 6, **characterised in that** the or each element (5) in the form of a bonnet or shell has at the level of its side walls (5") at least one strip (9) having a peripheral non-planar surface, comprising, for example, configurations in the form of ribs and grooves.

8. The process according to any of Claims 1 to 7, **characterised in that** only a rear portion (11') of the said shell (11) directed towards the card (2) is overmoulded by the thermoplastic material (12) forming a part of the body (6).

9. An electronic thermometer comprising a card or a printed circuit supporting the functional elements, particularly its electrical and/or electronic circuits and components, and connected to a temperature sensor unit by a probe, **characterised in that** the body (6) of the said thermometer (1) is overmoulded by a thermoplastic material, and **in that** the said body (6) comprises at least one hollow cavity (6'), each one delimited partly by the card or the printed circuit (2) and partly by the element (5), in the form of a bonnet or shell, included on said card or the said printed circuit (2), and in which at least a portion of the wall (5') is not covered by the thermoplastic material and is flush with the exterior surface (6") of said body (6), the said at least one element (5) enclosing the card (2) and the circuits or components (3,3') or forming with the said card (2) a closed hollow structure substantially isolating the circuit(s) (3'), the temperature sensor unit (10) being encapsulated in a shell (11).

10. An electronic thermometer according to claim 9, **characterised in that** it is produced as a finished moulding product through a production process according to any of claims 1 to 8, and has a rounded outer shape without any gap and recess.

## Patentansprüche

1. Verfahren zur Herstellung eines elektronischen Thermometers durch teilweises Anformen seiner Funktions- und/oder Bestandteile, insbesondere seiner elektrischen und/oder elektronischen Bauteile und Schaltungen, wobei das Thermometer mindestens eine Platine zur Aufnahme der elektrischen und elektronischen Bauteile und ein Temperatursensormodul mit einer entsprechenden Sonde umfasst, **dadurch gekennzeichnet, dass** es aus folgenden Schritten besteht:
- Einschließen der Platine (2) und der Schaltungen (3, 3') in ein als Hohlschale ausgebildetes Element (5) oder Anbringen auf der Platine (2) mindestens eines Elementes (5), das als Abdeckung oder Schale ausgebildet ist, die mit der Platine (2) eine hohle, im Wesentlichen geschlossene, die empfindliche(n) Schaltung(en) isolierende Struktur (3') bildet,
- Einkapseln des Temperatursensormoduls (10) in eine Schale (11) aus einem geeigneten Material und Verbinden des Moduls mit der Platine (2),
- Anordnen der Platine (2) mit den Schaltungen (3, 3'), des oder der als Abdeckung oder Schale ausgebildeten Elementes (5) und des Moduls (10) in einer Einspritzform (4), wobei die Platine (2) insbesondere über das mindestens eine als Abdeckung oder Schale ausgebildete Element (5), von dem mindestens ein Wandabschnitt (5') unmittelbar auf der Innenseite (4') der Form aufliegt, in der Form (4) positioniert wird,
- Schließen der Form (4) und Einspritzen des thermoplastischen Materials (12), das zur Formung mindestens eines Teils des Körpers (6) des betreffenden Thermometers (1) bestimmt ist und das den oder die als Abdeckung oder Schale ausgebildeten Elemente (5), mit Ausnahme der Wand bzw. der Wände oder des Abschnittes bzw. der Abschnitte der Wand bzw. der Wände, die mit der Innenseite (4') der Form (4) in Berührung stehen, teilweise abdeckt,
- und Entnahme des Thermometers (1) aus der Form (4) nach Verfestigung des eingespritzten thermoplastischen Materials.

2. Verfahren nach Anspruch 1, **dadurch gekennzeichnet, dass** die Platine (2) außerdem mindestens ein eingesetztes Passungsteil (7) aufweist, das sich an der Innenseite (4') der über einen Punktkontakt oder einen Quasi-Punktkontakt geschlossenen Form (4) abstützt.

3. Verfahren nach einem der Ansprüche 1 und 2, **dadurch gekennzeichnet, dass** die bzw. der mit der Innenseite (4') der Form (4) in Berührung stehende Wand oder Wandabschnitt (5') der Abdeckung bzw. der Schale (5) über mindestens einen Teil ihrer bzw. seiner Oberfläche transparent ist.

4. Verfahren nach einem der Ansprüche 1 bis 3, **dadurch gekennzeichnet, dass** die bzw. der mit der Innenseite (4') in Berührung stehende Wand oder Wandabschnitt (5') der Abdeckung oder der Schale (5) über mindestens einen Teil ihrer bzw. seiner Oberfläche eine weiche und elastische Beschaffenheit aufweist.

5. Verfahren nach einem der Ansprüche 1 bis 4, **dadurch gekennzeichnet, dass** das eingespritzte thermoplastische Material (12) im Wesentlichen den ganzen, einstückig ausgebildeten Körper (6) des Gerätes oder des Instrumentes (1) bildet und die Trägerstruktur (2), die Funktionselemente (3) und das bzw. die als Abdeckung oder Schale ausgebildete(n) Element(e) (5), mit Ausnahme der bzw. des in Berührung mit der Innenseite (4') der Form (4) stehenden Wand bzw. Wände oder Wandabschnittes bzw. der Wandabschnitte (5') ganz abdeckt.

6. Verfahren nach einem der Ansprüche 1 bis 5, **dadurch gekennzeichnet, dass** es darin besteht, die Platine(n) (2) mit mehreren Elementen (5, 8) zu bestücken, die geschlossene hohle Strukturen bilden oder die mit der Platine (2) geschlossene hohle Strukturen bilden, von denen mindestens eine mit der Innenseite (4') der Form (4) in Berührung steht und/oder von denen mindestens eine Schaltung oder ein empfindliches Bauteil (3') abdeckt, indem sie es von dem eingespritzten, zur Formung des Körpers (6) bestimmten Material gegen jegliche Berührung isoliert.

7. Verfahren nach einem der Ansprüche 1 bis 6, **dadurch gekennzeichnet, dass** das bzw. jedes als Abdeckung oder Schale ausgebildete Element (5) an seinen Seitenwänden (5'') mindestens ein nicht planes Umfangsband (9) aufweist, das beispielsweise rippen- oder rillenförmige Ausbildungen umfasst.

8. Verfahren nach einem der Ansprüche 1 bis 7, **dadurch gekennzeichnet, dass** nur ein hinterer in Richtung Platine (2) zeigender Abschnitt (11') der Schale (11) durch das einen Teil des Körpers (6) bildende thermoplastische Material (12) angeformt ist.

9. Elektronisches Thermometer mit einer Platine oder einer gedruckten Schaltung zur Aufnahme seiner Funktionselemente, insbesondere seiner Bauteile und elektrischen und/oder elektronischen Schaltungen, das mit einem in einer Sonde endenden Temperatursensormodul verbunden ist, **dadurch gekennzeichnet, dass** der Körper (6) des Thermometers (1) durch Anformen eines thermoplastischen Materials erfolgt und dass der Körper (6) mindestens einen Hohlraum (6') aufweist, der jeweils einerseits von der Platine oder der gedruckten Schaltung (2) und andererseits von einem auf der Platine oder der gedruckten Schaltung (2) eingesetzten, als Abdeckung oder Schale ausgebildeten Element begrenzt wird und von dem mindestens ein Wandabschnitt (5') nicht von dem thermoplastischen Material abgedeckt ist und mit der Außenfläche (6") des Körpers (6) bündig abschließt, wobei das mindestens eine Element (5) die Platine (2) und die Schaltungen oder Bauteile (3, 3') umschließt oder mit der Platine (2) eine geschlossene hohle Struktur bildet, welche die empfindliche(n) Schaltung(en) (3') isoliert und das Temperatursensormodul (10) in einer Schale eingekapselt ist.

10. Elektronisches Thermometer nach Anspruch 9, **dadurch gekennzeichnet, dass** es durch ein Herstellungsverfahren nach einem der Ansprüche 1 bis 8 als Fertigformteil hergestellt wird und eine gerundete Formkontur im Wesentlichen ohne Vertiefung und Zwischenraum aufweist.
